**Europäisches Patentamt**

**European Patent Office**

**Office européen des brevets**

(19)

(11) Veröffentlichungsnummer: **0 021 125**
**A1**

# EUROPÄISCHE PATENTANMELDUNG

(12)

(21) Anmeldenummer: **80103038.8**

(22) Anmeldetag: **31.05.80**

(51) Int. Cl.³: **B 60 P 3/03**

(30) Priorität: **09.06.79 DE 2923520**

(43) Veröffentlichungstag der Anmeldung: **07.01.81**
**Patentblatt 81/1**

(84) Benannte Vertragsstaaten: **AT BE CH DE FR GB IT LI LU NL SE**

(71) Anmelder: **Thiele & Co., Beim Struckenberge 11, D-2800 Bremen 21 (DE)**
Anmelder: **PROTECTAS GmbH & Co Gesellschaft für Sicherheit, Berner Strasse 101, D-6000 Frankfurt 56 (DE)**

(72) Erfinder: **Thiele, Wilhelm, Beim Struckenberge 11, D-2800 Bremen 21 (DE)**
Erfinder: **Braun, Erich, Berner Strasse 101, D-6000 Frankfurt 56 (DE)**

(74) Vertreter: **von Raffay, Vincenz, Dipl.-Ing. et al, Patentanwälte Dipl.-Ing. Vincenz v. Raffay Dipl.-Chem. Dr. Hans D. Boeters Postfach 32 32 17, D-2000 Hamburg 13 (DE)**

(54) Gepanzertes Transportfahrzeug, insbesondere für Geld und Wertgegenstände.

(57) Das gepanzerte Transportfahrzeug ist in einen Fahrer- und Personalraum (1), einen Transportraum (3) und eine Schleuse (2) abgeteilt.

Die Teilungswände sind ebenfalls gepanzert. In die Schleuse führt eine gepanzerte Außentür (9) und aus der Schleuse eine gepanzerte Innentür (18) in den Transportraum.

Fahrer- und Personalraum sind ohne Tür ausgebildet. Die Schleuse läßt eine Verbindung (1a) zwischen Fahrer- und Personalraum und Transportraum frei. Die Innentür sperrt in ihrer Offenstellung in bezug auf die Schleuse. Diese Verbindung (1a) sowie die Außen- und Innentür (9 und 18) sind so zwangsgekoppelt, da sich nur eine der beiden Türen zur Zeit öffnen läßt. Es ist also immer eine der beiden Türen der Schleuse verschlossen.

EP 0 021 125 A1

ACTORUM AG

- 1 -

## BEZEICHNUNG
### siehe Titelseite

Die Erfindung betrifft ein gepanzertes Transportfahrzeug,
insbesondere für Geld und Wertgegenstände, das in
einen Fahrer- und Personalraum, einen Transportraum
und eine Schleuse aufgeteilt ist,
deren Teilungswände ebenfalls gepanzert sind, wobei in
die Schleuse eine gepanzerte Außentür und aus der
Schleuse eine gepanzerte Innentür in den Transportraum
führt.

Bei einem bekannten Transportfahrzeug der vorstehend
genannten Art sind wie bei jedem derartigen Fahrzeug
seitliche Türen vorgesehen, durch die der Fahrer in
den Fahrerraum ein- und aussteigen kann. Im mittleren
Bereich befindet sich eine Schleuse. Die Außentür dieser
Schleuse ist unabhängig von der Innentür, die von der
Schleuse zum Transportraum führt, zu öffnen. Es ist also
möglich, daß diese beiden Türen geöffnet sind und dann
eine Durchsicht-und Durchschußmöglichkeit von außen direkt
in den Transportraum besteht. Bei derartigen bekannten
Transportfahrzeugen sind nicht nur Probleme bei Überfällen
aufgetreten, sondern unter Berücksichtigung der Routine
des täglichen Betriebes nimmt die Gefahr erheblich zu,
daß das Personal nachlässig wird und die Vorschriften
nicht beachtet, welches zu einem erheblichen Sicherheitsrisiko führt.

Der Erfindung liegt nun die Aufgabe zugrunde, die Sicherheit
durch Ausschalten der menschlichen Schwäche erheblich herabzusetzen.

Diese Aufgabe wird grundsätzlich dadurch gelöst,
daß der Fahrer- und Personalraum keine Außentür aufweist,
daß die Schleuse eine Verbindung zwischen Fahrer- und
Personalraum und Transportraum freiläßt,

daß die Innentür in ihrer Offenstellung in bezug
auf die Schleuse die Verbindung zwischen Fahrer-
und Personalraum und Transportraum absperrt und
daß Außentür und Innentür derart zwangsgekoppelt
sind, daß sich nur eine der beiden Türen zur Zeit
öffnen läßt.

grundsätzlich
Erfindungsgemäß ist also/immer eine der beiden Türen
der Schleuse verschlossen. Es ist nicht möglich, die
Innentür zu öffnen, bevor die Außentür wieder verschlossen
wurde. Ein Einstieg in den Fahrer- und Personalraum
ist direkt nicht möglich. Hierdurch wird die Sicherheit
der Personen erheblich erhöht. Die Gefahr, daß das
Transportgut in nachlässiger Weise nicht im Transportraum abgelegt wird, wird erheblich verringert. Die
zwangsläufige Kopplung zwischen den beiden Türen erhöht
die Gesamtsicherheit erheblich. Die Tatsache, daß die
Schleuse verhältnismäßig klein ist, d.h. einen direkten
Verbindungsgang zwischen Fahrer- und Personalraum und
Transportraum freiläßt, vereinfacht das Heizungs- und
Lüftungsproblem.

In vorteilhafter Weise kann die Vorrichtung nach der
Erfindung derart ausgebildet sein, daß Außentür und
Innentür Schiebetüren sind und daß die Innentür zwischen
der Öffnung zwischen Schleuse und Transportraum und der
Öffnung zwischen der Verbindung und dem Transportraum hin-
und herbewegbar ist. Diese Art der Ausgestaltung ist besonders vorteilhaft, da die Innentür ein Teil der Querwand bildet, in der die beiden Öffnung vorge..... en sind.
Die Innenschiebetür ist zwischen diesen beiden Öffnung
hin- und herschiebbar.

Weiterhin ist es in vorteilhafter Weise möglich, die Außentür nur von außen durch einen Schlüssel und vom Fahrer- und Personalraum zu öffnen. Das Öffnen erfolgt beispielsweise mechanisch durch eine Zugstange, die bis in den Fahrer- und Personalraum hineinreicht. Die Art der Benutzung des Transportfahrzeuges wird in Verbindung mit der Figurenbeschreibung näher erläutert.

Weitere vorteilhafte Ausgestaltungen sind Gegenstand der Unteransprüche 5 bis 9.

Im folgenden wird die Erfindung unter Hinweis auf die Zeichnung anhand eines Ausführungsbeispieles näher erläutert.

Da die äußere Gestalt derartiger Transportfahrzeuge sich nicht von herkömmlichen Transportfahrzeugen unterscheidet, zeigt die einzige Figur eine Draufsicht auf den Innenraum. Die linke Seite der Figur zeigt in Fahrtrichtung.

Der Innenraum des gepanzerten Transportfahrzeuges ist in drei Räume, nämlich den Fahrer- und Personalraum 1, die Schleuse 2 und den Transportraum 3 unterteilt. Der Fahrer- und Personalraum 1 enthält einen Fahrzeugführersitz 4, einen Fahrersitz 5 und einen Sitz 6 für eine gegebenenfalls mitfahrende Begleitperson. Ein Fenster 7 ist angedeutet. Seitliche Türen, die einen direkten Zugang zu diesem Fahrer- und Personalraum 1 ermöglichen, fehlen.

Die Schleuse 2 wird durch eine nicht ganz über die halbe Fahrzeugbreite verlaufende gepanzerte Querwand 14 und eine gepanzerte Querwand 13 gebildet. In der Außenwand der Schleuse befindet sich eine Öffnung 8, die durch eine gepanzerte Außenschiebetür 9 verschlossen ist. Diese Außenschiebetür 9 ist mit einem nur von außen zu betätigenden Schloß versehen, so daß sie nur von außen mit einem Schlüssel geöffnet werden kann. Von innen wird die Außenschiebetür mit Hilfe einer Zugstange 10 geöffnet. Dieses ist aber nur aus dem Fahrer- und Personalraum 1 möglich. Um die Außenschiebetür 9 in Offenstellung zu arretieren, ist eine Arretierung 11 ebenfalls in dem Fahrer- und Personalraum 1 vorgesehen. Eine Öffnung 16, die durch eine schmale gepanzerte Querwand 15 begrenzt wird, führt von der Schleuse 2 in den Transportraum 3. Diese Öffnung ist durch eine Innenschiebetür 18 verschlossen. Eine Öffnung 17 führt von dem Transportraum 3 in den Verbindungsgang 1a, der Teil des Fahrer- und Personalraumes 1 bildet und durch die verhältnismäßig schmale Schleuse 2 freigelassen wird.

Die Innenschiebetür 18 ist zwischen den beiden Öffnungen 16 und 17 hin- und herbewegbar, d.h. wenn die Öffnung 16 geöffnet wird, wird gleichzeitig die Öffnung 17 verschlossen und umgekehrt. Eine der gepanzerten Querwand 15 entsprechende Querwand befindet sich an der Außenkante der Öffnung 17.

In der Schleuse 2 sind das Reserverad 12 und entsprechendes Werkzeug untergebracht. Hierdurch ist es möglich, daß ein Reifenwechsel durch Hilfspersonal von außen durchgeführt werden kann, ohne daß das Personal das Fahrzeug verlassen muß oder der Transportraum 3 geöffnet werden muß.

Gegebenenfalls ist es möglich, in der Außenwand des Fahrzeuges im Bereich des Verbindungsganges 1a eine Schiebe- oder Falltür als Notausstieg vorzusehen, wenn das Fahrzeug nach einem Unfall auf der Seite der Außenschiebetür 9 liegt. Diese verhältnismäßig kleine Tür (nicht gezeigt) ist nur von innen zu öffnen.

Weiterhin ist es möglich, im Dach des Fahrzeuges
eine Vertiefung für die Antenne vorzusehen. Derartige
gepanzerte Transportfahrzeuge sollen einerseits möglichst
hoch sein, um einen großen Transportraum aufzuweisen
und einen komfortablem Transport zu ermöglichen, andererseits sind die Einfahrten in die Sicherheitsbereiche
von Banken u. dgl. häufig sehr niedrig, so daß die
Antennen beim Einfahren in diese Bereiche beschädigt
werden. Wenn die Antenne nun in einer Vertiefung sitzt,
kann sie sich ohne Beschädigung abbiegen. Die Befestigung der Antenne wird durch Balken und Vorsprünge nicht
erreicht.

Im folgenden soll der Ablauf einer Benutzung des Transportfahrzeuges nach dem vorstehend beschriebenen Ausführungsbeispiel erläutert werden. Zu Beginn eines Arbeitstages
wird die seitliche Außenschiebetür 9 mit Hilfe eines
Schlüssels von außen geöffnet, der sich in der Einsatzzentrale befindet und nach dem Öffnen wieder in die
Einsatzzentrale von einem entsprechend Beauftragten
zurückgebracht wird. Der Schlüssel zum Öffnen der Außenschiebetür befindet sich also nicht im Fahrzeug. Nachdem
die Tür geöffnet wurde, betritt der Transportführer die
Schleuse 2, und die Außenschiebetür schließt sich bedingt
durch den Druck der Gasfeder oder eines anderen Hilfsmittels automatisch hinter ihm. Mit einem zweiten Schlüssel,
der während des Arbeitstages beim Transportführer verbleibt,
öffnet dieser die Innenschiebetür 18. Nach dem Betreten
des Laderaumes 2 wird die Innenschiebetür wieder verschlossen, und der Transportführer erreicht seinen
Platz 4 in dem Fahrer- und Personalraum 1.

Nunmehr betätigt der Transportführer eine elektromechanische Verriegelung der Außentür und eine zusätzliche Verriegelung der Zugstange 10. Daran anschließend kann er mit Hilfe der Zugstange 10, die Außenschiebetür
öffnen, damit der Fahrer die Schleuse 2 betreten kann.
Nachdem sich der Fahrer innerhalb der Schleuse befindet,
gibt der Transportführer die Zugstange 10 frei, so daß
sich die Außenschiebetür wieder selbsttätig schließt.

Der Transportführer kann nun einen Schaltknopf für
eine elektromechanische Verriegelung der Innenschiebetür 18 betätigen, so daß der Fahrer die Schiebetür von
Hand öffnen kann. Die elektromechanische Verriegelung
der Innenschiebetür läßt sich nicht betätigen, wenn die
Außenschiebetür nicht einwandfrei verschlossen ist.
Zwischen den beiden elektromechanischen Verriegelungen
der beiden Türen besteht eine Zwangskopplung, so daß
sich nur eine der Türen zur Zeit öffnen läßt.

Der Fahrer schließt nach dem Betreten des Laderaumes 3
die Innenschiebetür 18 hinter sich und nimmt auf seinem
Platz 5 teil. Falls eine dritte Person mitfahren soll,
wiederholt sich der Vorgang.

Beim Verlassen des Fahrzeuges ergibt sich die umgekehrte
Reihenfolge. Während des Verladens von Geld und Wertgegenständen verbleibt der Transportführer grundsätzlich im
Fahrzeug. Er führt die optische Überwachung beim Be- und
Entladen aus und überwacht das Ein- und Aussteigen in
Verbindung mit der nur ihm möglichen Öffnung der seitlichen Außenschiebetür 9.

Die seitliche Außenschiebetür ist sowohl mechanisch -
über die Zugstange 10 - als auch elektromechanisch gesichert. Beide Funktionen können nur vom Transportführer
aufgehoben werden, wenn das Fahrzeug durch den Fahrer
betreten oder verlassen werden soll.

Falls die Be- und Entladung des Fahrzeuges in einem
abgeschlossenen Sicherheitsbereich - Sicherheitsschleuse einer Bank oder dgl. - erfolgt, besteht auch die
Möglichkeit, daß der Transportführer das Fahrzeug
verläßt. In diesem Falle muß er die elektromechanische
Verriegelung der Zugstange für die Außenschiebetür
entriegeln.Er geht nach hinten in den Transportraum 3,
öffnet die Innenschiebetür 18 mit dem nur ihm zur Verfügung stehenden Schlüssel, geht in die Schleuse 2
und schließt die Innenschiebetür hinter sich wieder
zu. Er kann dann die Außenschiebetür 9 mechanisch von
innen öffnen und arretiert diese Tür, wobei für diesen
Spezialfall eine besondere Arretierung in der Schleuse
vorgesehen ist. Nach erfolgter Beladung wird die
mechanische Arretierung im Schleusenbereich für die
Außenschiebetür wieder aufgehoben, der Transportführer
öffnet die Innenschiebetür mit seinem Schlüssel und
nimmt auf seinem Sitz platz. Danach wird für das Betreten
durch den Fahrer wie vorstehen beschrieben verfahren.

BAD ORIGINAL

**RAFFAY & BOETERS**
PATENTANWÄLTE
POSTFACH 32 32 17
D-2000 HAMBURG 13

30. Mai 1980

KANZLEI:
GEFFCKENSTRASSE 6
TELEFON: (040) 47 80 23
TELEGRAMME: PATFAY, HAMBURG

0021125

UNSERE AKTE: 2340/12

Anmelder:  1) Firma Thiele & Co.
Beim Struckenberge 11, 2800 Bremen 21

2) Firma PROTECTAS GmbH & Co.
Gesellschaft für Sicherheit
Berner Straße 101, 6000 Frankfurt 56

Gepanzertes Transportfahrzeug, insbesondere
für Geld und Wertgegenstände.

P a t e n t a n s p r ü c h e :

1. Gepanzertes Transportfahrzeug, insbesondere für
Geld und Wertgegenstände, das in einen Fahrer- und
Personalraum, einen Transportraum und eine Schleuse
aufgeteilt ist, deren Teilungswände ebenfalls gepanzert
sind, wobei in die Schleuse eine gepanzerte Außentür
und aus der Schleuse eine gepanzerte Innentür in den
Transportraum führt, dadurch gekennzeichnet,
daß der Fahrer- und Personalraum (1) keine Außentür
aufweist,
daß die Schleuse (2) eine Verbindung (1a) zwischen
Fahrer- und Personalraum (1) und Transportraum (3)
freiläßt,
daß die Innentür (18) in ihrer Offenstellung in bezug auf die Schleuse (2) die Verbindung (1a) zwischen
Fahrer- und Personalraum (1) und Transportraum (3)
absperrt und
daß Außentür (9) und Innentür (18) derart zwangsgekoppelt sind, daß sich nur eine der beiden Türen zur
Zeit öffnen läßt.


2. Gepanzertes Transportfahrzeug nach Anspruch 1,
dadurch gekennzeichnet, daß Außentür (9) und Innentür (18) Schiebetüren sind und daß die Innentür (18)
zwischen der Öffnung (16) zwischen Schleuse (2) und
Transportraum (3) und der Öffnung (17) zwischen der
Verbindung (1a) und dem Transportraum (3) hin- und
herbewegbar ist.


3. Gepanzertes Transportfahrzeug nach Anspruch 1,
dadurch gekennzeichnet, daß die Außentür (9) nur von
außen durch einen Schlüssel und vom Fahrer- und Personalraum (1) zu öffnen ist.


4. Gepanzertes Transportfahrzeug nach Anspruch 3,
dadurch gekennzeichnet, daß die Außentür (9) von dem
Fahrer- und Personlraum (1) mechanisch durch eine
Zugstange (10) zu öffnen ist.


5. Gepanzertes Transportfahrzeug nach Anspruch 3 oder 4,
dadurch gekennzeichnet, daß für die geöffnete Außentür (9)
eine vom Fahrer- und Personalraum (1) betätigbare
Arretierung (11) vorgesehen ist.


6. Gepanzertes Transportfahrzeug nach einem oder mehreren
der vorstehenden Ansprüche, dadurch gekennzeichnet,
daß die Außentür (9) in Schließstellung vorgespannt ist.

7. Gepanzertes Transportfahrzeug nach Anspruch 6,
dadurch gekennzeichnet, daß die Außentür (9) durch
eine Gasfeder vorgespannt ist.

8. Gepanzertes Transportfahrzeug nach einem oder mehreren
der vorstehenden Ansprüche, dadurch gekennzeichnet, daß
Reserverad (12) und Werkzeug in der Schleuse (2) untergebracht sind.

9. Gepanzertes Transportfahrzeug nach einem oder mehreren
der vorstehenden Ansprüche, dadurch gekennzeichnet, daß
die Funkantenne in einer Vertiefung (nicht gezeigt) im
Dach befestigt ist.

Beschreibung

0021125

| Europäisches Patentamt | **EUROPÄISCHER RECHERCHENBERICHT** |
|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 063 824 (MASSING) <br> * Das ganze Dokument * <br> -- | 1 |
| | GB - A - 1 501 167 (SECURICOR LTD) <br> * Das ganze Dokument * <br> -- | 1 |
| | FR - A - 2 345 310 (SECURICOR LTD) <br> * Das ganze Dokument * <br> ---- | 1 |

**KLASSIFIKATION DER ANMELDUNG (Int.Cl. 3)**

B 60 P 3/03

**RECHERCHIERTE SACHGEBIETE (Int. Cl. 3)**

B 60-P 3/03

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

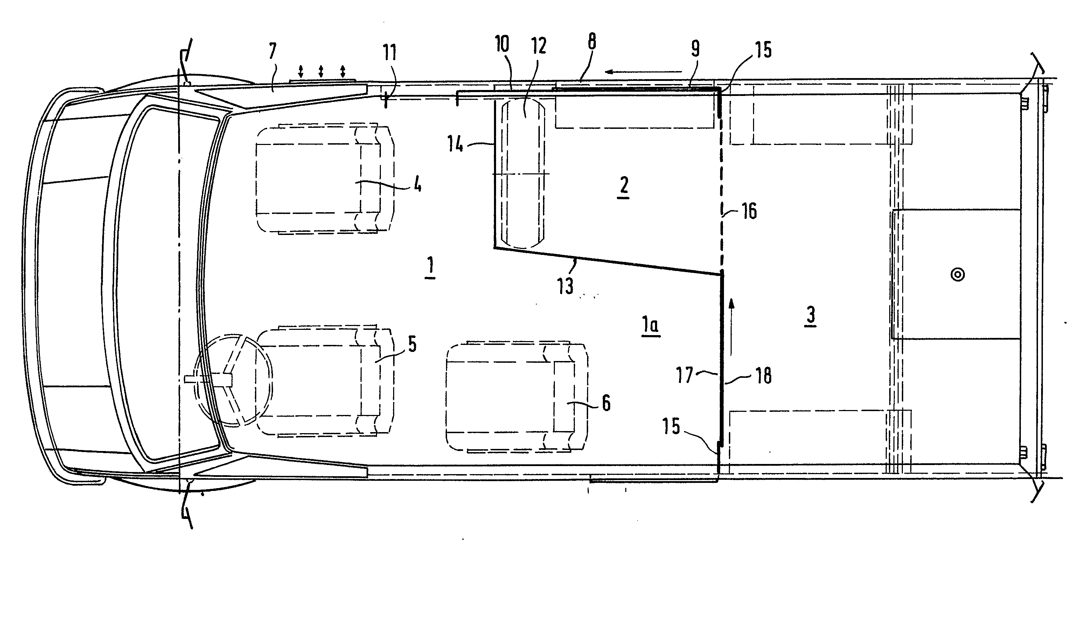

| Recherchenort | Abschlußdatum der Recherche | Prüfer |
|---|---|---|
| Den Haag | 15-08-1980 | PETERS |

EPA form 1503.1   06.78